# EUROPÄISCHE PATENTANMELDUNG

(11) **EP 1 852 301 A2**
(43) Veröffentlichungstag der Anmeldung: **07.11.2007**
(21) Anmeldenummer: 07007663.3
(22) Anmeldetag: 14.04.2007
(51) Int. Cl.: B60N 2/46, B60R 7/04

(54) **Personenkraftwagen mit einer Mittelkonsole**

(30) Priorität: 06.05.2006 DE 102006021184
(71) Anmelder: Bayerische Motoren Werke Aktiengesellschaft, 80809 München (DE)
(72) Erfinder: Stavermann, Jörg, 80331 München (DE); Edelmann, Ralph, 84453 Mühldorf (DE)

(57) **Zusammenfassung**

Aufgabe der Erfindung ist es, eine Mittelkonsole mit einer Armauflage für einen Innenraum eines Personenkraftwagens zu schaffen, die eine individuelle ergonomische Anpassung an eine Vielzahl von Personen unterschiedlicher Größe ermöglicht.

Erfindungsgemäß weist ein Personenkraftwagen eine Mittelkonsole (1,1') mit zumindest einer höhenverstellbaren Armauflage (3,3') auf, wobei - in Fahrtrichtung gesehen - vor der Armauflage (3,3') zumindest ein Bedienelement (4,4') angeordnet ist. Dieses Bedienelement (4,4') ist zusammen mit der Armauflage (3,3') höhenverstellbar. Dadurch bleiben die ergonomischen Bedingungen zum Erreichen des Bedienelementes (4,4') in allen Höheneinstellungen der Armauflage (3,3') weitgehend erhalten.

## Beschreibung

Die Erfindung betrifft eine Mittelkonsole für einen Innenraum eines Personenkraftwagens, die sich zwischen zwei Vordersitzen des Innenraums erstreckt.

Aus der DE 38 07 880 C2 ist eine sich zwischen zwei Vordersitzen erstreckende Mittelkonsole mit einer verstellbaren Armauflage bekannt. Die Armauflage dient außerdem zur Abdeckung eines Ablagefachs in der Mittelkonsole. Um die Armauflage an unterschiedliche Sitzpositionen der Vordersitze anpassen zu können, ist diese entlang der Mittelkonsole in bestimmten Grenzen längsverschiebbar gehalten.

Aus der DE 196 11 894 C1 ist ebenfalls eine Mittelkonsole mit einem Ablagefach bekannt, das mit einer Armauflage abdeckbar ist. Das Ablagefach ist zusammen mit der Armauflage mittels einer unter dem Ablagefach angeordneten, aufblasbaren Luftkammer höhenverstellbar.

Aufgabe der Erfindung ist es, eine Mittelkonsole mit einer Armauflage für einen Innenraum eines Personenkraftwagens zu schaffen, die eine individuelle ergonomische Anpassung an eine Vielzahl von Personen unterschiedlicher Größe ermöglicht.

Diese Aufgabe wird mit einem Personenkraftwagen mit einer Mittelkonsole mit den Merkmalen des Patentanspruchs 1 gelöst.

Erfindungsgemäß weist ein Personenkraftwagen eine Mittelkonsole mit zumindest einer höhenverstellbaren Armauflage auf, wobei - in Fahrtrichtung gesehen - vor der Armauflage zumindest ein Bedienelement angeordnet ist. Dabei ist das zumindest eine Bedienelement so angeordnet, dass es mit der Hand bequem bedient werden kann, wenn der Unterarm eines Passagiers auf der Armauflage abgestützt ist. Das Bedienelement ist zusammen mit der Armauflage höhenverstellbar. Dadurch bleiben die ergonomischen Bedingungen zum Erreichen des Bedienelementes in allen Höheneinstellungen der Armauflage weitgehend erhalten. Die Armauflage kann an unterschiedliche Sitzpositionen der Vordersitze angepasst werden, ohne dass dadurch die Erreichbarkeit des zumindest einen Bedienelementes beeinträchtigt werden würde.

Bevorzugt ist die Armauflage zugleich Deckel eines Ablagefachs in der Mittelkonsole. Durch diese funktionale Integration ist kein separater Deckel für das Ablagefach erforderlich. Günstigerweise ist dabei das Ablagefach zusammen mit der Armauflage und dem zumindest einen Bedienelement höhenverstellbar.

Vorteilhafterweise erfolgt die Höhenverstellung fremdkraftbetätigt, sodass die Verstellung durch den Nutzer ohne Kraftaufwand möglich ist. Bevorzugt erfolgt die Höhenverstellung durch zumindest ein aufblasbares Luftkissen, das unter zumindest einem Bereich der Armauflage mit dem zumindest einen Bedienelement, unter dem Ablagefach oder unter zumindest einem Bereich der Mittelkonsole angeordnet ist. Gegenüber einer klassischen Höhenverstellung mittels einer entsprechenden Mechanik hat das aufblasbare Luftkissen den Vorteil, dass es über die Lebensdauer fast keine Verschleißerscheinungen aufweist. Zudem erfolgt die Höhenverstellung praktisch spielfrei und geräuscharm, da der Kompressor zum Befüllen des Luftkissens mit einem Gas an einer beliebigen Stelle im Fahrzeug angeordnet werden kann. Dies stellt auch bezüglich des Bauraums einen Vorteil dar, da der Kompressor nicht im Bereich der Mittelkonsole angebracht werden muss, sondern in einem ansonsten ungenutzten Freiraum im Fahrzeuginnenraum angeordnet werden kann. Das Luftkissen kann ein oder mehrere Luftkammern aufweisen, deren Ausdehnung beim Befüllen mit dem Gas zum Anheben der Armauflage mit dem zumindest einen Bedienelement führt. Das Luftkissen wird dabei in seiner Ausdehnung durch spezielle Anordnungen so gesteuert, dass die Ausdehnung nur in die gewünschte Richtung erfolgt. Bei einer im Fahrzeug verfügbaren Zentralpneumatik kann das notwendige Gasvolumen auch über diese erzeugt werden. Andere im Fahrzeug befindliche Armauflagen können über dieselbe Gasquelle separat angesteuert werden.

Weitere vorteilhafte Ausgestaltungen sind Gegenstand von Unteransprüchen.

In der Zeichnung ist ein Ausführungsbeispiel der Erfindung dargestellt, anhand dessen die Erfindung im folgenden näher beschrieben wird. Die einzelnen Figuren zeigen in schematischer Darstellungsweise:
Fig. 1 einen Längsschnitt durch eine Prinzipdarstellung einer Mittelkonsole mit einer höhenverstellbaren Armauflage und
Fig. 2 eine Seitenansicht einer höhenverstellbaren Mittelkonsole.

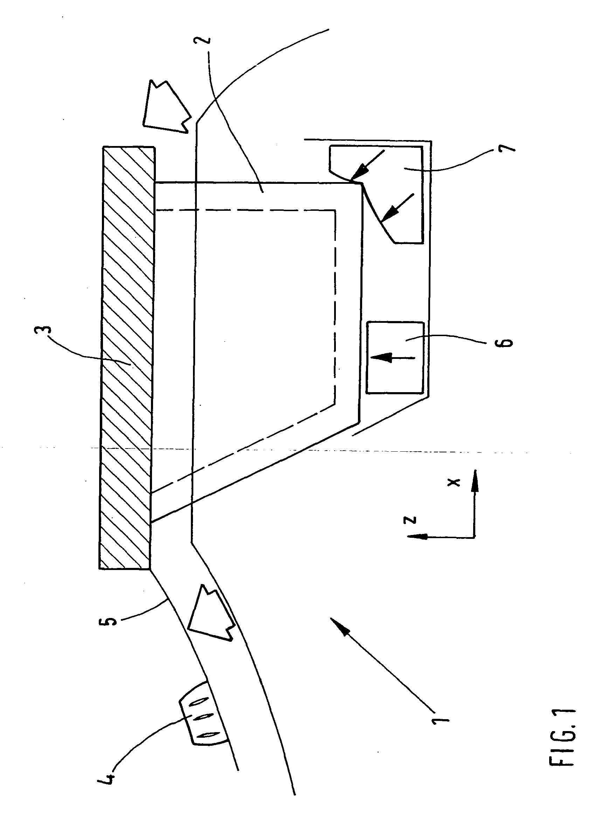

In Fig. 1 ist eine Mittelkonsole 1 dargestellt, die sich in einem Innenraum eines Personenkraftwagens zwischen zwei Vordersitzen in Fahrzeuglängsrichtung (x) erstreckt. In die Mittelkonsole ist ein Ablagefach 2 eingelassen. Auf dem Ablagefach 2 ist eine Armauflage 3 angelenkt, die zugleich als Deckel für das Ablagefach 2 fungiert. In Fahrtrichtung gesehen vor der Armauflage 3 ist ein Bedienknopf 4 angeordnet, der zur Betätigung gedreht und / oder gedrückt werden kann. Der Bedienknopf 4 ist über einen Träger 5 mit dem oberen Rand des Ablagefachs 2 verbunden.

Das Ablagefach 2 ist gegenüber der Mittelkonsole 1 höhenverstellbar (in Richtung z). Dazu sind unter dem Ablagefach 2 ein vorderes und ein hinteres aufblasbares Luftkissen 6 und 7 angeordnet. Diese können durch einen Kompressor, der außerhalb der Mittelkonsole 1 im Fahrzeuginnenraum angeordnet ist, aufgeblasen werden. Dadurch dehnen sich die Luftkissen 6 und 7 aus und heben so das Ablagefach 2 an. Zusammen mit dem Ablagefach 2 werden dabei zugleich die Armauflage 3 und der Bedienknopf 4 mit angehoben. Zum Absenken des Ablagefachs 2 muss nur die Luft aus den Luftkissen 6 und 7 ausströmen oder aus den Luftkissen 6 und 7 abgesaugt werden.

Gegenüber einem bekannten Höhenverstellmechanismus beispielsweise mittels einer Spindel haben die Luftkissen 6 und 7 zur Höhenverstellung den Vorteil, dass sie nur einem sehr geringen Verschleiß unterliegen und eine sehr geräuscharme Höhenverstellung ermöglichen, wenn der dazugehörige Kompressor nicht in der Mittelkonsole 1 angeordnet ist. Zudem arbeiten derartige Luftkissen 6 und 7 spielfrei und ermöglichen eine stufenlose Höhenverstellung. Auch muss keine Mechanik zur Höhenverstellung im Bereich der Mittelkonsole 1 angeordnet werden, sodass der zur Verfügung stehende Bauraum in der Mittelkonsole 1 voll für das Ablagefach 3 zur Verfügung steht, was den Komfort für den Kunden erhöht.

Das Ablagefach 2 ist dabei in der Mittelkonsole 1 geführt, sodass es beim Anheben eine definierte Bewegung ausführt. Diese Führung kann so ausgelegt sein, dass das Ablagefach 2 rotatorisch und / oder linear höhenverstellbar ist. Für eine rotatorische Höhenverstellung ist das Ablagefach 2 im vorderen Bereich an an der Karosserie des Personenkraftwagens angelenkt, wobei die Schwenkachse in Fahrzeugquerrichtung verläuft.

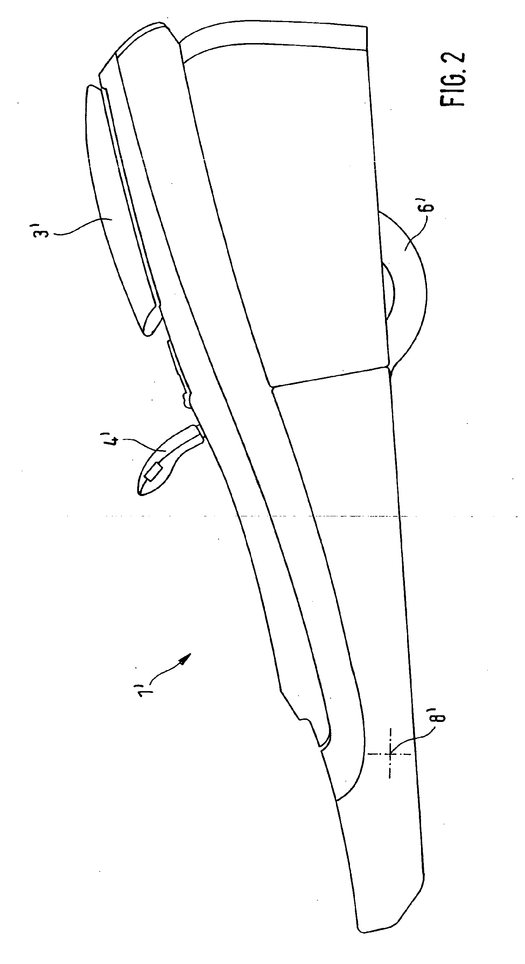

Alternativ zu der in Fig. 1 gezeigten Ausführung kann - wie in Fig. 2 gezeigt - anstelle des Ablagefachs 2 die gesamte Mittelkonsole 1' inklusive der Armauflage 3' und einem davor angeordneten Joystick 4' als Bedienknopf höhenverstellbar sein. Dazu ist die Mittelkonsole 1' im vorderen Bereich über eine in Fahrzeugquerrichtung verlaufende Achse 8' an der Karosserie des Personenkraftwagens schwenkbar angelenkt. Im hinteren Bereich ist zwischen der Karosserie und der Mittelkonsole 1' ein aufblasbares Luftkissen 6' angeordnet. Wenn nun dieses Luftkissen 6' durch einen Kompressor aufgeblasen wird, verschwenkt die Mittelkonsole 1' um die Achse 8'. Dadurch wird die Mittelkonsole 1' im Bereich hinter der Achse 8' angehoben. Da sich sowohl die Armauflage 3' als auch der Joystick 4' in diesem Bereich hinter der Achse 8' befinden, werden beide auf diese Weise angehoben. Zum Absenken muss nur die Luft aus dem Luftkissen 6' wieder abgelassen werden.

Durch das Anheben der gesamten Mittelkonsole 1' zur Höhenverstellung bleibt das Grunddesign der Mittelkonsole 1' weitgehend erhalten. Bei einer geeigneten Grundauslegung der Mittelkonsole 1' kann die Höhenverstellung ausschließlich durch Hinzufügen des Höhenverstellmechanismus erzeugt werden, sodass die gleiche Mittelkonsole 1' verwendet werden kann, unabhängig davon, ob sie eine Höhenverstellung aufweist oder nicht. Daraus ergeben sich erhebliche Kosteneinsparpotentiale, wenn die höhenverstellbare Mittelkonsole 1' beispielsweise nur als Sonderzubehör angeboten werden soll.

Der Bereich zwischen der höhenverstellbaren Mittelkonsole 1' und der mit der Karosserie des Personenkraftwagens verbundenen Innenverkleidung kann zumindest in einem Abschnitt mit einem flexiblen Material überspannt sein. So kann sichergestellt werden, dass auch bei angehobener Mittelkonsole 1' kein Spalt zwischen dieser und der karosseriefesten Innenverkleidung sichtbar ist.

Beide in Fig. 1 und Fig. 2 gezeigte Varianten haben den großen Vorteil, dass die Armauflage 3, 3' individuell an die jeweilige Sitzposition und die jeweilige Statur des Passagiers in der Höhe anpassbar ist. Diese Höhenverstellung ist dabei möglich, ohne dass der Passagier dafür Einbussen bezüglich einer ergonomischen komfortablen Bedienung eines vor der Armauflage 3, 3' angeordneten Bedienknopfes 4, 4' in Kauf nehmen muss, da dieser zusammen mit der Armauflage 3, 3' angehoben wird, sodass sich dessen Position relativ zur Armlehne 3, 3' praktisch nicht ändert.

## Patentansprüche

1. Personenkraftwagen mit einer Mittelkonsole (1, 1') mit zumindest einer höhenverstellbaren Armauflage (3, 3'), wobei - in Fahrtrichtung gesehen - vor der Armauflage (3, 3') zumindest ein Bedienelement (4, 4') angeordnet ist, **dadurch gekennzeichnet, dass** das zumindest eine Bedienelement (4, 4') zusammen mit der Armauflage (3, 3') höhenverstellbar ist.

2. Personenkraftwagen nach Anspruch 1, **dadurch gekennzeichnet, dass** die Armauflage (3) zugleich Deckel eines Ablagefachs (2) in der Mittelkonsole (1) ist.

3. Personenkraftwagen nach Anspruch 1 oder 2, **dadurch gekennzeichnet, dass** das Ablagefach (2) zusammen mit der Armauflage (3) und dem zumindest einen Bedienelement (4) höhenverstellbar ist.

4. Personenkraftwagen nach Anspruch 1 oder 2, **dadurch gekennzeichnet, dass** die gesamte Mittelkonsole (1') inklusive der Armauflage (3') und dem zumindest einen Bedienelement (4') höhenverstellbar ist.

5. Personenkraftwagen nach einem der vorhergehenden Ansprüche, **dadurch gekennzeichnet, dass** die Armauflage (3) mit dem zumindest einen Bedienelement (4) und gegebenenfalls mit dem Ablagefach (2) oder die Mittelkonsole (1') im vorderen Bereich rotatorisch an der Karosserie des Personenkraftwagens angelenkt ist, wobei die Schwenkachse (8') in Fahrzeugquerrichtung verläuft.

6. Personenkraftwagen nach einem der vorhergehenden Ansprüche, **dadurch gekennzeichnet, dass** die Höhenverstellung fremdkraftbetätigt erfolgt.

7. Personenkraftwagen nach Anspruch 6, **dadurch gekennzeichnet, dass** die Höhenverstellung durch zumindest ein aufblasbares Luftkissen (6, 6', 7) erfolgt, das unter zumindest einem Bereich der Armauflage mit dem zumindest einen Bedienelement, unter dem Ablagefach (2) oder unter zumindest einem Bereich der Mittelkonsole (1') angeordnet ist.

8. Personenkraftwagen nach einem der vorhergehenden Ansprüche, **dadurch gekennzeichnet, dass** eine stufenlose Höhenverstellung möglich ist.

9. Personenkraftwagen nach einem der vorhergehenden Ansprüche, **dadurch gekennzeichnet, dass** der Bereich zwischen der höhenverstellbaren Armauflage (3) mit dem zumindest einen Bedienelement (4) und der Mittelkonsole (1) oder der Bereich zwischen der höhenverstellbaren Mittelkonsole (1') und der mit der Karosserie des Personenkraftwagens verbundenen Innenverkleidung zumindest in einem Abschnitt mit einem flexiblen Material überspannt ist.
